# EUROPÄISCHE PATENTSCHRIFT

(11) **EP 0 845 653 B1**
(45) Veröffentlichungstag und Bekanntmachung des Hinweises auf die Patenterteilung: **09.06.2004**
(21) Anmeldenummer: 97117834.8
(22) Anmeldetag: 15.10.1997
(51) Int. Cl.: G01B 5/008, G01B 5/00

(54) **Koordinatenmessgerät**
Coordinate measuring device
Appareil de mesure de coordonnées

(30) Priorität: 28.11.1996 DE 19649252
(43) Veröffentlichungstag der Anmeldung: 03.06.1998
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Broghammer, Heinz, 78658 Zimmern o.R. (DE)

(56) Entgegenhaltungen:
- EP-A- 0 663 715
- US-A- 4 724 713
- US-A- 5 068 972
- US-A- 5 072 522
- US-A- 5 357 819
- PATENT ABSTRACTS OF JAPAN vol. 010, no. 274 (P-498), 18. September 1986 (1986-09-18) -& JP 61 097501 A (HITACHI LTD), 16. Mai 1986 (1986-05-16)

## Beschreibung

Die Erfindung betrifft ein Koordinatenmeßgerät mit wenigstens einem zur Vermessung eines Werkstückes auf einer Führung beweglich geführten Teil und einem Antrieb zur Bewegung des Teils entlang der Führung.

Derartige Koordinatenmeßgeräte sind bereits seit längerem in großer Variationsbreite bekannt. Sie dienen der dreidimensionalen Vermessung von zu vermessenden Werkstücken, wobei hierzu das Werkstück entweder mechanisch oder aber optisch von einem entsprechenden Taster angetastet wird. Der Taster ist zur Antastung des zu vermessenden Werkstückes dabei an einer Mechanik aufgehängt, von der er in drei aufeinander senkrecht stehenden Meßrichtungen bewegt werden kann. Hinsichtlich der besagten Mechanik gibt es derzeit zwei gängige Ausführungsformen, nämlich einerseits den sogenannten Ständeraufbau und andererseits den sogenannten Portalaufbau.

Beim Ständeraufbau befindet sich der Taster an einem waagerechten Ausleger. Der Ausleger ist über einen Schlitten derart an einem senkrecht stehenden Ständer beweglich geführt, daß er sowohl horizontal entlang seiner Längsachse, wie auch vertikal entlang dem Ständer bewegt werden kann. Der Ständer ist seinerseits auf einem Maschinenbett ebenfalls beweglich geführt und kann in der besagten dritten Meßrichtung horizontal bewegt werden.

Bei Portalmeßgeräten ist der Aufbau ähnlich. Der Taster ist hierbei an einer vertikal ausgerichteten Pinole befestigt. Die Pinole ist über einen Schlitten am überspannenden Teil eines das zu vermessende Werkstück überspannenden Portals beweglich geführt. Die Pinole kann über den Schlitten einerseits vertikal entlang ihrer Längsachse bewegt werden sowie horizontal entlang dem überspannenden Teil des Portals. Das Portal seinerseits ist auf einem Maschinenbett ebenfalls beweglich geführt und kann horizontal in der besagten dritten Meßrichtung bewegt werden.

Die beweglich geführten Teile, wie beispielsweise der Ständer, das Portal, der Schlitten, der Ausleger, die Pinole etc. sind hierbei auf einer Führung beweglich geführt, wobei die entsprechenden beweglichen Teile zur Bewegung entlang der Führung über einen Antrieb angetrieben werden.

Hinsichtlich der Antriebe gibt es bislang die unterschiedlichsten Möglichkeiten.

So wurde beispielsweise vorgeschlagen, die beweglich geführten Teile mittels elektromotorisch betriebener Zugspindeln anzutreiben. Hierbei wird üblicherweise eine gegenüber der Führung ortsfeste und zur Führung parallele Zugspindel, die ein Gewinde aufweist, durch einen Elektromotor gedreht. Eine am beweglich geführten Teil befestigte Mutter greift hierbei in das besagte Gewinde der Zugspindel ein und wird durch die Drehung der Zugspindel entlang der Führung bewegt.

Es wurde gleichfalls vorgeschlagen, beweglich geführte Teile von Koordinatenmeßgeräten mittels elektromotorisch betriebener Zugriemen anzutreiben. Hierbei treibt üblicherweise ein gegenüber der Führung ortsfester Elektromotor einen Zugriemen an, der fest mit dem beweglich geführten Teil verbunden ist, sodaß hierdurch das beweglich geführte Teil angetrieben wird.

Zunehmende Verbreitung bei dem Antrieb von Koordinatenmeßgeräten haben auch elektromotorisch angetriebene Reibradantriebe gefunden, bei denen gummibeschichtete Reibräder reibschlüssig mit einer speziell dafür vorgesehenen Lauffläche zusammenwirken, und hierdurch die beweglich geführten Teile antreiben. Da die beweglichen Teile üblicherweise über hochempfindliche Luftlager auf den Führungen gelagert sind, wurde hierbei die besagte Lauffläche von der Führung entkoppelt.

Das Dokument Patent Abstracts of Japan vol. 010, no. 274 (P-498) vom 18. September 1986 und die zugehörige Japanische Patentanmeldung JP 61 097501 A zeigt ein Antriebssystem für die vertikale Z-Achse eines Portalkoordinatenmessgerätes. Zur Bewegung der Z-Achse befindet sich seitlich der Z-Achse ein sogenannter "guide bar", an dessen oberen Ende das obere Ende der Z-Achse befestigt ist. Der "guide bar" ist zur Bewegung der Z-Achse zwischen zwei gegenüberliegenden Rollen reibschlüssig eingespannt. Eine der Rollen wird dabei von einem Motor angetrieben.

Aufgabe der vorliegenden Erfindung ist es hiervon ausgehend ein kostengünstig herzustellendes Koordinatenmeßgerät mit einem einfachen Antrieb bereit zu stellen.

Die Aufgabe wird gemäß den Merkmalen des Anspruches 1 gelöst.

Der Antrieb zum Bewegen des Teils ist über eine reibschlüssige Verbindung mit der Führung verbunden.

Die Führung dient damit sowohl dem Führen des beweglich geführten Teils, wie auch dem Antrieb des beweglich geführten Teils. Hierdurch ergeben sich die besonderen Vorteile, daß einerseits der gesamte Platzbedarf für den Antrieb und die Führung des beweglich geführten Teils erheblich verringert werden kann und andererseits der Aufbau des Antriebes vereinfacht wird.

Die reibschlüssige Verbindung wird von einem elektrischen Motor angetrieben, der über eine Kupplung mit der reibschlüssigen Verbindung verbunden ist. Durch die Verbindung des Motors mit der reibschlüssigen Verbindung.über eine Kupplung kann bezweckt werden, daß der Motor bei Bedarf auch abgekuppelt wird, so daß das bewegliche Teil dann von Hand bewegt werden kann.

In einer vorteilhaften Weiterbildung des Koordinatenmeßgerätes kann der Antrieb sich auf einem separaten, auf der Führung beweglich gelagerten Schlitten befinden, der mit dem beweglich geführten Teil über einen Verbinder quer zur Führung beweglich verbunden ist. Eine derartige Ausgestaltung des Koordinatenmeßgerätes weist gegenüber herkömmlichen Koordinatenmeßgeräten erhebliche Vorteile auf. So kann hierdurch bewirkt werden, daß Querkräfte, die durch den Antrieb entstehen, nicht mehr auf das beweglich geführte Teil übertragen werden. Dies führt zu einer erheblichen Verbesserung der Meßgenauigkeit. Außerdem kann die Verbindung zwischen dem Schlitten und dem beweglich geführten Teil derart ausgebildet sein, daß sich hierdurch eine thermische Entkopplung des Antriebes vom beweglich geführten Teil ergibt, so daß Meßungenauigkeiten, die sich durch die Erwärmung des Antriebes ergeben, weitestgehend verhindert werden können.

Damit der Schlitten quer zum beweglich geführten Teil beweglich verbunden ist, sollte der hierzu vorgesehene Verbinder wenigstens zwei Gelenke aufweisen. Die konkrete Ausgestaltung des Verbinders kann hierbei derart ausgestaltet sein, daß der Verbinder eine Stange aufweist, die an ihrem einen Ende über eines der Gelenke mit dem Schlitten verbunden ist und an ihrem anderen Ende über das andere Gelenk mit dem beweglichen Teil verbunden ist. Die Gelenke können hierbei entweder in Form von Drehgelenken vorgesehen sein, so daß der Schlitten dann in Drehrichtung der Drehgelenke quer zur Führung beweglich mit dem beweglichen verbunden ist. Die Gelenke können jedoch auch in Form von Kugelgelenken vorgesehen sein, so daß dann der Schlitten gegenüber dem beweglichen Teil in jeder Richtung quer zur Führung beweglich ist.

Als reibschlüssige Verbindung sind hierbei eine Vielzahl von unterschiedlichen Varianten denkbar. Die reibschlüssige Verbindung kann beispielsweise ein Reibrad umfassen das an der Führung anliegt. Die reibschlüssige Verbindung kann allerdings auch einen Riemen umfassen, der um zwei drehbare Rollen umläuft, wobei die Außenseite des Riemens ebenfalls an der Führung anliegt.

Als mögliche Führungen kommen prinzipiell eine Vielzahl von unterschiedlichen Führungen in Betracht. So können natürlich übliche Führungen aus Stein verwendet werden, auf denen das bewegliche Teil über Luftlager gelagert ist. Wie bereits oben ausgeführt, sind derartige Führungen jedoch relativ empfindlich, sodaß die Führung besonders vorteilhaft als Metallführung ausgebildet sein sollte, auf der das bewegliche Teil dann über sogenannte, unten noch näher ausgeführte Kugelschuhe oder aber über Rollen geführt ist.

Weitere Vorteile und Weiterbildungen der Erfindung ergeben sich hierbei aus den Figuren.

Hierin zeigen:
- Fig. 1: Ein erfindungsgemäßes Koordinatenmeßgerät in Ständerbauweise;
- Fig. 2: eine Antriebseinheit für ein Koordinatenmeßgerät gemäß Figur 1 in der Aufsicht;
- Fig. 3: die Antriebseinheit gemäß Figur 2 in der Seitenansicht.

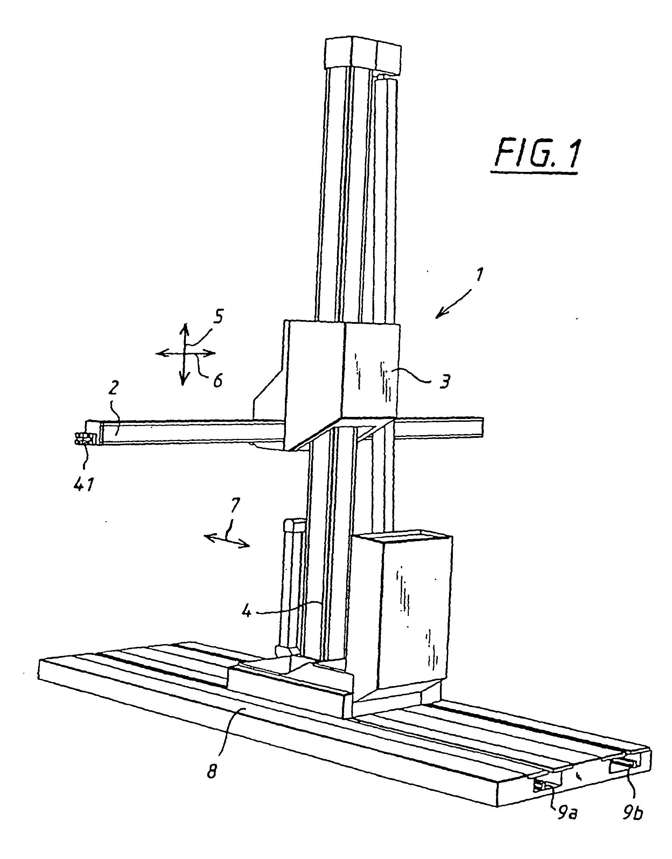

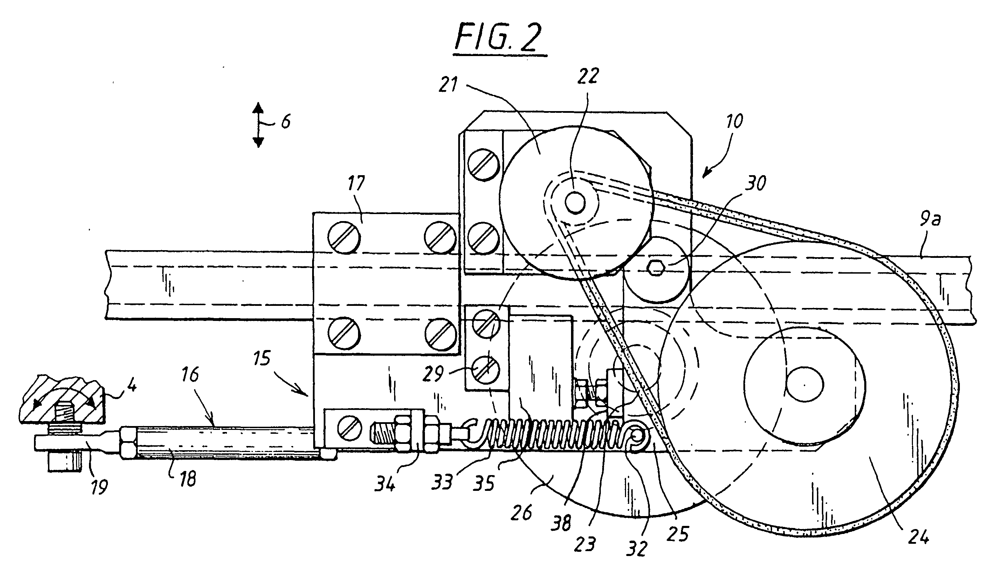

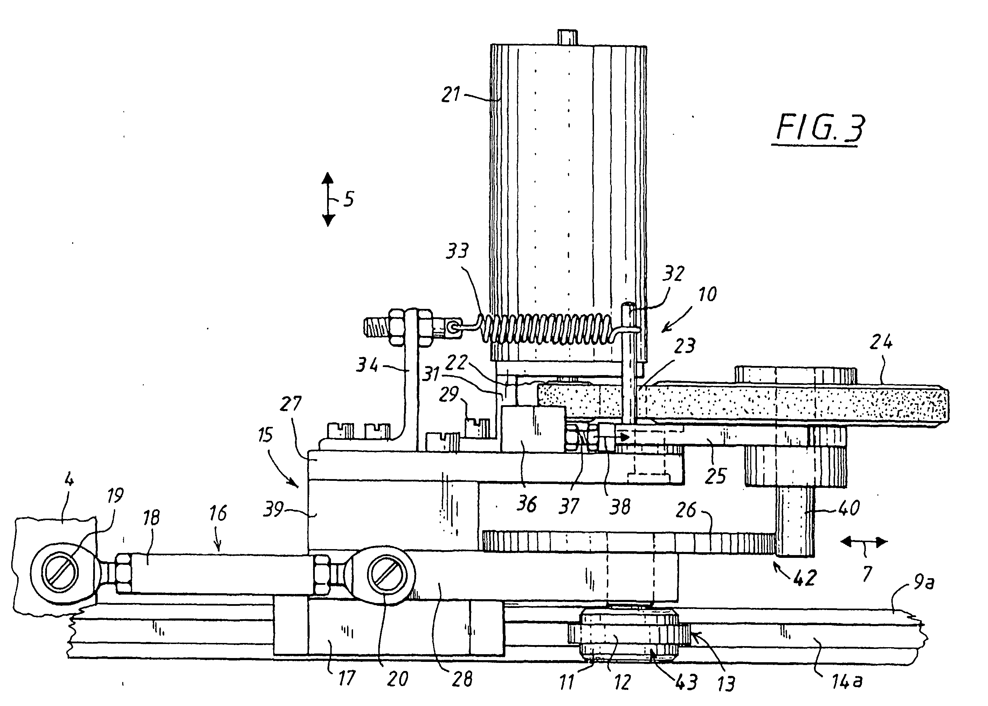

Figur 1 zeigt ein erfindungsgemäßes Koordinatenmeßgerät (1) mit wenigstens einem zur Vermessung eines Werkstückes auf den Führungen (9a, 9b) beweglich geführten Teil (4) in Form eines Ständers und einem in Figur 1 nicht näher gezeigten Antrieb (10) - vergleiche Figuren 2 und 3 - zur Bewegung des Teils (4) bzw. des Ständers entlang den Führungen (9a, 9b), die hierbei als Metallschienen ausgeführt sind.

Das beweglich geführte Teil (4) ist hierbei über nicht näher gezeigte Kugelschuhe auf den Führungen (9a, 9b) geführt. Derartige Kugelschuhe und die dazugehörigen Führungen sind bereits aus dem Stand der Technik bekannt. Wir verweisen diesbezüglich auf das Produkt "Kugel-Schienenführungen" von der Firma Deutsche Star, der Mannesmann-Rexrodt-Gruppe.

An dem Teil (4) ist wiederum ein Z-Schlitten (3) derartig beweglich gelagert, daß er in Richtung dem Pfeil (5) vertikal am Teil (4) bewegt werden kann. Zusätzlich weist der Z-Schlitten (3) noch eine Führung für den Ausleger (2) auf, der in Richtung dem Pfeil (6) horizontal entlang dem Z-Schlitten (3) bewegt werden kann. Am Ende des Auslegers (2) ist hierbei der besagte Taster (41) befestigt, über den das zu vermessende Werkstück vermessen werden kann. Der Taster (41) ist hierbei nicht näher zeichnerisch dargestellt und kann wie bei Koordinatenmeßgeräten üblich entweder als mechanischer Taster oder als optischer Taster ausgebildet sein.

Zur detaillierteren Betrachtung der Erfindung soll nunmehr auf die Figuren 2 und 3 Bezug genommen werden, in denen eine Aufsicht bzw. eine Seitenansicht der Antriebseinheit für das Teil (4) vom erfindungsgemäßen Koordinatenmeßgerät gezeigt ist.

Wie insbesondere aus Figur 3 hervorgeht, weist der Antrieb (10) der Antriebseinheit zum bewegen des Teils (4) eine reibschlüssige Verbindung (13) auf, die mit der Führung (9a) verbunden ist. Die reibschlüssige Verbindung (13) umfaßt hierbei ein Reibrad (43), bestehend aus dem Rad (11) und einem darauf aufgesetzten Gummi (12), das an der Führung (9a) anliegt. Der Gummi (12) des Reibrades (43) liegt hierbei in einer Nut (14a) an der Führung (9a) an.

Die Führung (9a) selber ist als Metallführung aus Stahl aufgebaut und weist seitlich jeweils Nuten (14a) auf, von denen hier verständlicherweise nur die Nut der einen Seite gezeigt ist.

Wie aus der Zeichnung weiterhin zu sehen ist, befindet sich der Antrieb (10) auf einem separaten auf der Führung (9a) beweglich gelagerten Schlitten (15), der mit dem beweglich geführten Teil (4) über einen Verbinder (16) quer zur Führung (9a) beweglich verbunden ist. Der gesamte Schlitten (15) ist hierbei wie dies bereits weiter oben im Zusammenhang mit dem Teil (4) bereits beschrieben wurde, über einen Kugelschuh (17) auf der Führung (9a) in Richtung dem Pfeil (7) beweglich gelagert. Wie ebenfalls bereits oben ausgeführt sind derartige Kugelschuhe mit den dazugehörigen Führungen unter der Bezeichnung "Kugel-Schienenführungen" bei der Firma Deutsche Star von der Mannesmann-Rexrodt-Gruppe erhältlich.

Der besagte Verbinder (16) ist hierbei wie folgt ausgestaltet um den Schlitten (15) mit dem beweglich geführten Teil (4) quer zur Führung beweglich zu verbinden. Der Verbinder (16) weist dazu eine Stange (18) auf, die an ihrem einen Ende über ein Gelenk (20) mit dem Schlitten (15) verbunden ist und an ihrem anderen Ende über ein Gelenk (19) mit dem beweglichen Teil (4) verbunden ist.

Die Gelenke (19, 20) sind hierbei als standardmäßig erhältliche Kugelgelenke ausgebildet, wobei hierbei eine Art Schraube auf der ein Teilsegment einer Kugel ausgeformt ist in einem entsprechenden zugehörigen Käfig gelagert ist. Das wesentliche für die quer zur Führung (9a) bewegliche Verbindung durch den Verbinder (16) ist hierbei darin zu sehen, daß der Verbinder (16) wenigsten zwei Gelenke (19, 20) aufweist. Hierdurch kann der Schlitten (15) gegenüber dem Teil (4) sowohl in Richtung des Pfeils (5), wie auch in Richtung des Pfeils (6) gegenüber dem Teil (4) bewegt werden, ohne hierdurch das Teil (4) mitzubewegen. In Antriebsrichtung gemäß dem Pfeil (7) hingegen ist der Schlitten (15) mit dem Teil (4) vollkommen starr verbunden, so daß die Antriebskraft unmittelbar auf das Teil (4) übertragen werden kann.

Im Folgenden soll nun die genaue Funktionsweise des Antriebes (10) erläutert werden. Der Antrieb (10) umfaßt hierbei als wesentliches Element einen Motor (21), dessen Antriebsrad (22) über einen Keilriemen (23) ein auf einer Platte (25) drehbar gelagertes Rad (24) antreibt. Das Rad (24) ist durch die Platte (25) hindurch mit einem Rad (40) starr verbunden, das über eine reibschlüssige Verbindung ein zweites Rad (26) antreibt, welches seinerseits unmittelbar durch die Platte (28) hindurch mit dem Reibrad (43) verbunden ist.

Die reibschlüssige Verbindung (13) bzw. das Reibrad (43) wird somit also vom Motor (21) angetrieben, wobei der Motor (21) allerdings über eine Kupplung (42) mit der reibschlüssigen Verbindung (13) bzw. dem Reibrad (43) verbunden ist. Die besagte Kupplung (42) soll nun im folgenden erläutert werden. Wie bereits oben ausgeführt, ist der Motor (21) über eine entsprechende Halterung (31) und eine Schraube (29) auf der Platte (27) festgeschraubt. Das Rad (24) hingegen ist auf einer Platte (25) drehbar gelagert, wobei die Platte (25) ihrerseits um eine Drehachse (30) gegenüber der Platte (27) drehbar ist. Im Normalzustand wird hierbei die Platte (25) über den Stift (32), die Feder (33) und den hieran befestigten Halter (34) gegen die Platte (27) gezogen, so daß das Rad (40) am Rad (26) anliegt und hierdurch ständig eine reibschlüssige Verbindung vorliegt. Um jedoch den Motor (21) vom Reibrad (43) abzukoppeln, ist zusätzlich auf der Platte (27) eine Pneumatik (36) angebracht, über die ein Kolben (37) in Richtung des Pfeils (38) bewegt werden kann, so daß die Platte (25) um die Achse (30) verschwenkt wird und das Rad (40) nicht mehr am Rad (26) anliegt. Hiermit läßt sich das Teil (4) und natürlich der Schlitten (15) ohne weiteres von Hand verschieben.

Die Erfindung ist selbstverständlich nicht auf die hier gezeigte Ausführungsform beschränkt. Es sollen selbstverständlich sämtlich Koordinatenmeßgeräte miterfaßt werden, die gemäß der Erfindung, wie sie im Anspruch 1 definiert ist, aufgebaut sind. Beispielsweise können Anstelle des hier als Ständer beschriebenen beweglich geführten Teils (4) auch andere beweglich geführten Teile, die bei Koordinatenmeßgeräten Einsatz finden, wie beispielsweise das Portal eines Portalmeßgerätes, der Ausleger (2) etc. mit einem erfindungsgemäßen Antrieb versehen werden.

## Patentansprüche

1. Koordinatenmeßgerät (1) mit einer Führing (9a, 9b), wenigstens einem zur Vermessung eines Werkstückes auf der Führung (9a, 9b) beweglich geführten Teil (4) und einem Antrieb (10) zur Bewegung des Teils (4) entlang der Führung (9a, 9b) umfassend eine reibschlüssige Verbindung (13), eine Kupplung (42) und einen Motor (21), wobei der Antrieb (10) zum Bewegen des Teils (4) über die reibschlüssige Verbindung (13) mit der Führung (9a, 9b) verbunden ist, und die reibschlüssige Verbindung (13) von dem Motor (21) antreibbar ist, der über die Kupplung (42) mit der reibschlüssigen Verbindung (13) verbunden ist.

2. Koordinatenmeßgerät nach Anspruch 1, wobei der Antrieb (10) sich auf einem separaten auf der Führung (9a, 9b) beweglich gelagerten Schlitten (15) befindet, der mit dem beweglich geführten Teil (4) über einen Verbinder (16) quer zur Führung beweglich verbunden ist.

3. Koordinatenmeßgerät nach Anspruch 2, wobei der Verbinder (16) wenigstens zwei Gelenke (19, 20) aufweist.

4. Koordinatenmeßgerät nach Anspruch 3, wobei der Verbinder eine Stange (18) aufweist, die an ihrem einen Ende über eines der Gelenke mit dem Schlitten (15) verbunden ist und an ihrem anderen Ende über das andere Gelenk (19) mit dem beweglichen Teil (4).

5. Koordinatenmeßgerät nach Ansprüchen 1 oder 2, wobei die reibschlüssige Verbindung (13) ein Reibrad (43) umfaßt, das an der Führung (9a, 9b) anliegt.

6. Koordinatenmeßgerät nach Anspruch 1, wobei die Führung (9a, 9b) eine Metallführung ist.

## Claims

1. Coordinate measuring device (1) comprising at least one guide (9a, 9b), at least one part (4) guided such that it can move on the guide (9a, 9b) to measure a workpiece, and a drive (10) for moving the part (4) along the guide (9a, 9b), comprising a frictional connection (13), a clutch (42) and a motor (21), the drive (10) for moving the part (4) being connected to the guide (9a, 9b) via the frictional connection (13) and it being possible for the frictional connection (13) to be driven by the motor (21), which is connected to the frictional connection (13) via the clutch (42).

2. Coordinate measuring device according to Claim 1, the drive (10) being located on a separate carriage (15) which is mounted such that it can move on the guide (9a, 9b) and which is connected to the movably guided part (4) via a connector (16) such that it can move transversely with respect to the guide.

3. Coordinate measuring device according to Claim 2, the connector (16) having at least two joints (19, 20).

4. Coordinate measuring device according to Claim 3, the connector having a rod (18) which is connected at one end to the carriage (15) via one of the joints and at its other end to the movable part (4) via the other joint (19).

5. Coordinate measuring device according to Claim 1 or 2, the frictional connection (13) comprising a friction wheel (43) which bears on the guide (9a, 9b).

6. Coordinate measuring device according to Claim 1, the guide (9a, 9b) being a metal guide.

## Revendications

1. Appareil de mesure de cordonnées (1) équipé d'un guide (9a, 9b), d'au moins une partie (4) guidée de façon mobile sur le guide (9a, 9b) pour le mesurage d'une pièce et d'un entraînement (10) pour le déplacement de la partie (4) le long du guide (9a, 9b), comprenant un assemblage (13) par liaison à friction, un accouplement (42) et un moteur (21), l'entraînement (10) pour le déplacement de la partie (4) étant relié par l'assemblage (13) par liaison à friction au guide (9a, 9b), et l'assemblage (13) par liaison à friction pouvant être entraîné par le moteur (21), lequel est relié par l'accouplement (42) à l'assemblage (13) par liaison à friction.

2. Appareil de mesure de cordonnées selon la revendication 1, l'entraînement (10) se trouvant sur un coulisseau (15) séparé et logé de façon mobile sur le guide (9a, 9b), qui est relié à la partie (4) guidée de façon mobile par un raccord (16) de façon mobile transversalement au guide.

3. Appareil de mesure de cordonnées selon la revendication 2, le raccord (16) présentant au moins deux articulations (19, 20).

4. Appareil de mesure de cordonnées selon la revendication 3, le raccord présentant une barre (18) qui est reliée au coulisseau (15) sur l'une de ses extrémités par l'une des articulations et à la partie (4) mobile sur son autre extrémité par l'autre articulation (19).

5. Appareil de mesure de cordonnées selon la revendication 1 ou 2, l'assemblage (13) par liaison à friction comprenant une roue de friction (43) qui s'appuie sur le guide (9a, 9b).

6. Appareil de mesure de cordonnées selon la revendication 1, le guide (9a, 9b) étant un guide en métal.
